# EUROPÄISCHE PATENTANMELDUNG

(11) **EP 1 832 167 A2**
(43) Veröffentlichungstag der Anmeldung: **12.09.2007**
(21) Anmeldenummer: 07004263.5
(22) Anmeldetag: 01.03.2007
(51) Int. Cl.: A01N 25/34, A01N 53/00, A01N 25/00

(54) **Vorrichtung zur Insektenbekämpfung, insbesondere zur Bekämpfung von Fliegen**

(30) Priorität: 01.03.2006 DE 202006003327 U; 01.03.2006 DE 202006003326 U; 03.04.2006 DE 202006005398 U; 03.04.2006 DE 202006005397 U; 03.04.2006 DE 202006005395 U; 03.04.2006 DE 202006005396 U; 03.04.2006 DE 202006005391 U; 08.12.2006 DE 102006058252
(71) Anmelder: ARIS Handels GmbH, 85049 Ingolstadt (DE)
(72) Erfinder: Ledin, Ali, 85053 Ingolstadt (DE); Önem-Siakou, Evgenia, Dr., 85049 Ingolstadt (DE)
(74) Vertreter: Liebl, Thomas

(57) **Zusammenfassung**

Die Erfindung betrifft eine Vorrichtung zur Insektenbekämpfung, insbesondere zur Bekämpfung von Fliegen, mit einer Trägerschicht (1) und wenigstens einer auf der Trägerschicht (1) aufgebrachten Wirkstoffschicht (2; 3, 4), die eine vorgegebene Menge wenigstens eines Wirkstoffes zur Insektenbekämpfung aufweist. Erfindungsgemäß ist die wenigstens eine Wirkstoffschicht (2; 3, 4) als Fraß- und/oder Kontaktschicht, insbesondere in pastöser Form, ausgebildet, in der der wenigstens eine Wirkstoff als Fraß- und/oder Kontaktgift gespeichert ist.

## Beschreibung

Die Erfindung betrifft eine Vorrichtung zur Insektenbekämpfung, insbesondere zur Bekämpfung von Fliegen, nach dem Oberbegriff des Anspruchs 1.

Derartige Insektenbekämpfungsvorrichtungen sind allgemein bekannt, so z. B. als im Raum aufhängbare Klebestreifen, bei der eine Trägerschicht mit einer Kleberschicht beschichtet ist, so dass die Fliegen oder andere Insekten, die sich auf der Kleberschicht niederlassen, dort zurückgehalten werden. Eine ähnliche Vorrichtung hierzu ist aus der DE 102 27 947 C1 bekannt, bei der eine Insektenfalle mit einem Hologramm versehen ist, welches das insektenanlockende Element ausbildet. Auf diesem Hologramm ist eine Kleberschicht angeordnet, mittels der die Insekten in bzw. an der Falle zurückgehalten werden sollen. Diese Insektenfalle kann neben dem Hologramm auch weitere Elemente zum Anlocken von Insekten enthalten, wie z. B. Lockstoffe, Fraßstimulanzien, Farbpigmente, phosphorisierende Pigmente, Lichteffekte, geometrische Muster etc.

Weiter sind Verdampfergeräte allgemein bekannt, die zur Insektenbekämpfung unter Energiezufuhr Insektizide verdampfen. Ein Problem mit derartigen Vorrichtungen ist jedoch, dass die Insektizide regelmäßig nicht nur für die Insekten, sondern auch für Menschen toxisch sind.

Aufgabe der vorliegenden Erfindung ist es daher, eine alternative Vorrichtung zur Insektenbekämpfung, insbesondere als Fliegenköder zur Bekämpfung von Fliegen, zur Verfügung zu stellen, mittels der eine effektive Insektenbekämpfung über einen langen Zeitraum ohne toxische Gefährdung von Menschen ermöglicht werden kann.

Diese Aufgabe wird gelöst mit den Merkmalen des Anspruchs 1.

Gemäß Anspruch 1 ist vorgesehen, dass die wenigstens eine Wirkstoffschicht als Fraß- und/oder Kontaktschicht ausgebildet ist, in dem der wenigstens eine Wirkstoff als Fraß- und/oder Kontaktgift langdauernd gespeichert ist.

Dadurch wird erreicht, dass die Wirkstoffe von den zu bekämpfenden Insekten hauptsächlich als Nahrung und/oder durch Kontakt aufgenommen werden, so dass eine toxische Gefährdung von Menschen durch hohe Wirkstoffabgaben in die Umgebung zuverlässig vermieden werden kann. Die Fraß- und/oder Kontaktschicht ist hier bevorzugt pastös ausgebildet, d. h. wird als Fraß-und/oder Kontaktpastenschicht auf die Trägerschicht aufgebracht, was einfach und zuverlässig möglich ist, wobei in einer Paste ein besonders zuverlässiges Einspeichern des Fraß- und/oder Kontaktgiftes bzw. der Fraß- und/oder Kontaktgiftpartikei möglich ist. Weiter ist eine solche Pastenschicht hervorragend für den Verzehr durch Insekten geeignet, da die pastöse Form die Nahrungsaufnahme für diese erleichtert.

Das Fraß- bzw. Kontaktgift ist bevorzugt durch wenigstens einen Wirkstoff aus der Gruppe der Pyrethroide, insbesondere durch Transfluthrin und/oder D-Phenothrin und/oder Prallethrin und/oder Empenthrin, gebildet. Alternativ oder zusätzlich dazu kann das Fraßgift auch durch einen Wirkstoff aus der Gruppe der Phosphorsäureester, insbesondere durch Dichlorvos, gebildet sein. Da diese Wirkstoffe, insbesondere die Pyrethroide, wie z. B. Transfluthrin und D-Phenothrin, eine große Neigung zum Ausdampfen haben, wird gemäß einer besonders bevorzugten Ausgestaltung der Erfindung vorgesehen, zur Herabsetzung der Flüchtigkeit bzw. des Dampfdruckes der besonders flüchtigen Wirkstoffe diese in einem Lösungsmittel zu lösen, das in der Mischung mit dem Wirkstoff die Flüchtigkeit so herabsetzt, dass die Flüchtigkeit des Gemisches aus Wirkstoff und Lösungsmittel geringer als diejenige des jeweiligen Wirkstoffes alleine ist. Besonders bevorzugt und geeignet als Lösungsmittel ist ein Öl oder eine Ölmischung, insbesondere aus Olivenöl und/oder Rapsöl und/oder Sonnenblumenöl. Alternativ können hierzu auch Poylethylenglykole verwendet werden. Mit einer derartigen Maßnahme kann somit auf zuverlässige und funktionssichere Weise sichergestellt werden, dass die gewünschten Wirkstoffe in der jeweiligen Wirkstoffschicht dauerhaft und in der gewünschten Weise, d. h. mit gewünschter Flüchtigkeit, gespeichert werden können, so dass diese Wirkstoffschicht eine Fraß- bzw. Kontaktschicht ausbildet und das Gift von den Insekten z. B. als Nahrung aufgenommen wird, was eine besonders hohe Mortalität der Insekten zur Folge hat, so dass diese nicht nur betäubt, sondern getötet werden. Alternativ bzw. zusätzlich hierzu können die Wirkstoffe bzw. kann die Wirkstoffmischung zur Beeinflussung der Flüchtigkeit aber auch verkapselt sein. Die Verkapselung der Wirkstoffe, insbesondere der Pyrethroide (Transfluthrin, D-Phenothrin, Empenthrin und Prallenthrin einzeln oder in Mischungen untereinander) geschieht dabei folgendermaßen: Der jeweilige Wirkstoff bzw. die jeweilige Wirkstoffmischung wird in eine flüssige Form überführt, z. B. durch Schmelzen oder durch Lösung in einem Lösungsmittel. Die so erhaltene Schmelze bzw. Flüssigkeit wird dann durch entsprechende Behandlung in Tröpfchen umgewandelt, wobei die Tröpfchenoberfläche jedes Tropfens durch ein reaktives Monomer umhüllt wird. Dieses Monomer wird anschließend polymerisiert, so dass der Wirkstofftropfen bzw. der Wirkstoffmischungstropfen mit einem Polymer umhüllt ist. Durch die Schichtdicke des Polymers, die bei diesem Verfahren eingestellt werden kann, wird dann die Abgaberate und die Verdampfung des Wirkstoffes entsprechend eingestellt und kontrollierbar. D. h. dass hier dann die Umhüllung, die auch durch andere Kunststoffe gebildet sein kann, die Diffusionsbarriere ausbildet, durch die der Wirkstoff hindurch diffundieren kann. Ebenso wie die Wirkstoffe können auch alle anderen gegebenenfalls vorhandenen Duft- und/oder Lockstoffe in einem Lösungsmittel gelöst sein bzw. verkapselt sein, um deren Abgabe zeitlich steuern zu können. Dies wird nachfolgend vorausgesetzt und nicht mehr separat erwähnt.

Gemäß einer ersten, besonders kostengünstigen Variante besteht die Vorrichtung lediglich aus einem zweischichtigen Aufbau, der auf der Trägerschicht lediglich eine einzige bevorzugt pastöse Wirkstoffschicht aufweist. Diese Wirkstoffschicht weist bevorzugt darin eingebrachte Lockstoffe auf, bzw. besteht wenigstens teilweise aus einem Lockstoff, womit sichergestellt wird, dass die Insekten zusätzlich angelockt werden können. Die Wirkstoffschicht besteht hierzu konkret wenigstens teilweise aus sogenannten Fraßstimulanzien, wie z. B. Honig und/oder Malz und/oder Zucker. Alternativ oder zusätzlich dazu kann die Wirkstoffschicht aber auch wenigstens bereichsweise aus sogenannten fernwirkenden Fraßködern, wie z. B. Skatol und/oder Milchsäure bestehen bzw. diese aufweisen. Ferner können in der Wirkstoffschicht als Lockstoffe auch Pheromone gespeichert sein, um die Insekten anlocken - zu können. Bei der Wirkstoffschicht handelt es sich vorzugsweise durch eine auf die Trägerschicht aufdruckbare, insbesondere im Siebdruckverfahren aufdruckbare Paste, die auf die Trägerschicht mit 0,05 bis 50 mg/cm², bevorzugt 0,2 bis 35 mg/cm², höchst bevorzugt 0,5 bis 30 mg/cm² aufgebracht ist, um vorzugsweise eine Wirkstoffschicht mit durchgehend in etwa gleicher Schichtstärke auszubilden. Die bevorzugte Schichtdicke beträgt dabei zwischen 0,05 bis 1,5 mm. Bevorzugt ist die Schicht jedoch relativ dick ausgebildet, d. h. im Bereich zwischen 0,1 bis 1,5 mm, um eine Art Diffusionsbarriere auszubilden, die zuverlässig verhindert, dass die Wirkstoffe insgesamt oder schnell aus dem Inneren der Schicht an die aktive Oberfläche diffundieren können. Je dünner die Schicht ist, desto größer ist somit die Flüchtigkeit der Wirkstoffe bei einem derartigen Aufbau mit einer einzigen Wirkstoffschicht. Um die Flüchtigkeit auch bei dünnen Schichtdicken der Wirkstoffschicht herabzusetzen bzw. in der gewünschten Weise zu beeinflussen, können die verwendeten Wirkstoffe, wie zuvor beschrieben, in einem Lösungsmittel gelöst und/oder verkapselt werden. Diese Maßnahme(n) können selbstverständlich auch bei dickeren Schichtdicken bzw. auch bei Aufbauten mit mehreren Schichten, wie diese nachfolgend noch näher beschrieben werden, Verwendung finden.

Gemäß einer weiteren bevorzugten Ausführungsform der Erfindung sind in der Wirkstoffschicht 0,005 bis 7 mg/cm², bevorzugt 0,05 bis 5 mg/cm², höchst bevorzugt 0,1 bis 3 mg/cm² Transfluthrin und/oder 0,001 bis 4 mg/cm², bevorzugt 0,05 bis 3 mg/cm², höchst bevorzugt 0,01 bis 2 mg/cm² D-Phenothrin enthalten. Durch die Ausbildung der Vorrichtung mit einer Fraß- und/oder Kontaktschicht, in der die Wirkstoffe als Fraß- bzw. Kontaktgift gespeichert sind, können somit relativ hohe Wirkstoffkonzentrationen in der Wirkstoffschicht vorgesehen sein, so dass entsprechend der erfindungsgemäßen Lehre eine für Menschen unschädliche Insektenvernichtung mit hoher Mortalitätsrate möglich ist.

Gemäß einer gegenüber dem zweischichtigen Aufbau anderen Variante der Vorrichtung ist diese wenigstens dreischichtig aus der Trägerschicht und wenigstens zwei weiteren Wirkstoffschichten aufgebaut, wobei eine erste Wirkstoffschicht als Zwischenschicht zwischen der Trägerschicht und einer zweiten Wirkstoffschicht vorgesehen ist. Mit einer derartigen mehr als zweischichtigen Ausbildung der Vorrichtung lassen sich unterschiedliche, höchst effektive Varianten von Insektenbekämpfungsvorrichtungen zur Verfügung stellen, wie dies nachfolgend im Einzelnen näher erläutert wird:
So kann gemäß einer ersten besonders bevorzugten Variante vorgesehen sein, dass der wenigstens eine in der ersten bevorzugt pastösen Wirkstoffschicht gespeicherte Wirkstoff bzw. wenigstens ein Teil davon, eine höhere Flüchtigkeit aufweist als der wenigstens eine in der zweiten bevorzugt pastösen Wirkstoffschicht gespeicherte Wirkstoff. In diesem Fall wirkt somit die zweite Wirkstoffschicht als eine Art Barriereschicht, die verhindert, dass die leichter flüchtigen Wirkstoffe der ersten Wirkstoffschicht länger in der ersten bzw. nach dem Eindiffundieren in die zweite Wirkstoffschicht in eben dieser zweiten Wirkstoffschicht zurückgehalten und damit insgesamt länger in der Vorrichtung gespeichert werden können. In der zweiten Wirkstoffschicht sind dann bevorzugt diejenigen Wirkstoffe aufgenommen, die eine niedrigere Flüchtigkeit bzw. einen niedrigeren Dampfdruck aufweisen, und deren Bestreben zum Ausdampfen aus der Vorrichtung relativ gering ist. Die erste Wirkstoffschicht bildet hier gemäß einer besonders bevorzugten Variante somit ein Reservoir für die flüchtigen Wirkstoffe aus, die dann in die zweite Wirkstoffschicht eindiffundieren können, wie dies nachfolgend noch näher erläutert wird. Gegebenenfalls kann die Flüchtigkeit der einzelnen Wirkstoffe in den jeweiligen Wirkstoffschichten hier auch, wie dies zuvor bereits allgemein beschrieben worden ist, durch die Zugabe von schwerer verdampfenden Lösungsmitteln, wie beispielsweise Öl oder Polyethylenglykol, entsprechend den jeweils vorhandenen Auslegungswünschen eingestellt werden und/oder der Wirkstoff bzw. die Wirkstoffmischung verkapselt werden.

Gemäß einer besonders bevorzugten konkreten Ausgestaltung hierzu ist diese Vorrichtung insgesamt dreischichtig aus der Trägerschicht, aus der darauf angebrachten ersten Wirkstoffschicht als Zwischenschicht und aus der auf die erste Wirkstoffschicht aufgebrachten zweiten Wirkstoffschicht als Barriereschicht aufgebaut. Die einzelnen Schichten werden dabei bevorzugt im Druckverfahren aufgebracht, insbesondere im Siebdruckverfahren, wobei die jeweiligen Schichten durch Pasten gebildet werden. Gemäß einer besonders bevorzugten, konkreten Ausgestaltung hierzu wird auf die Trägerschicht 0,05 bis 40 mg/cm², bevorzugt 0,3 bis 30 mg/cm² und höchst bevorzugt 0,5 bis 22 mg/cm² Paste als erste Wirkstoffschicht mit vorzugsweise in etwa durchgehend gleicher Schichtstärke aufgebracht. Auf diese erste Wirkstoffschicht wird dann 0,05 bis 40 mg/cm², bevorzugt 0,3 bis 30 mg/cm² und höchst bevorzugt 0,5 bis 22 mg/cm² Paste als zweite Wirkstoffschicht mit ebenfalls vorzugsweise in etwa durchgehend gleicher Schichtstärke aufgebracht, so dass ein insgesamt dreischichtiger Aufbau zur Verfügung gestellt wird. Die Wirkstoffe jeder einzelnen Wirkstoffschicht sind dabei zudem bevorzugt in eine Lockmittelpaste eingebracht, bevorzugt eingerührt, die wenigstens ein Lockmittel enthält, z. B. die zuvor genannten Fraßstimulanzien, Pheromone oder fernwirkenden Fraßköder. Die einzelnen Wirkstoffe können dabei, wie dies ebenfalls zuvor beschrieben worden ist, gegebenenfalls in einem schwerer verdampfbaren Lösungsmittel gelöst und/oder verkapselt sein um die Flüchtigkeit bzw. den Dampfdruck des jeweiligen Wirkstoffes herabzusetzen bzw. in der gewünschten Weise einzustellen.

Besonders bevorzugt ist der Wirkstoff der ersten Wirkstoffschicht durch Empenthrin und/oder D-Phenothrin und/oder Dichlorvos gebildet, wobei die bevorzugte Konzentration der Wirkstoffe in der ersten Wirkstoffschicht 0,005 bis 6 mg/cm², bevorzugt 0,03 bis 4 mg/cm², höchst bevorzugt 0,09 bis 3 mg/cm² beträgt. Der Wirkstoff der zweiten Wirkstoffschicht ist dagegen bevorzugt durch Transfluthrin und/ gegebenenfalls D-Phenothrin und/oder Dichlorvos gebildet, wobei die zweite Wirkstoffschicht gemäß einer besonders bevorzugten konkreten Ausgestaltung 0,005 bis 4 mg/cm², bevorzugt 0,05 bis 2,5 mg/cm², höchst bevorzugt 0,1 bis 1,5 mg/cm² Transfluthrin aufweist. Alternativ oder zusätzlich dazu ist gemäß einer weiteren bevorzugten Ausgestaltung vorgesehen, dass die zweite Wirkstoffschicht 0,001 bis 2 mg/cm², bevorzugt 0,05 bis 1,2 mg/cm², höchst bevorzugt 0,01 bis 0,5 mg/cm² D-Phenothrin und/oder Dichlorvos aufweist.

Eine besonders bevorzugte konkrete Ausgestaltung der Erfindung in Verbindung mit einer auf die erste Wirkstoffschicht aufgebrachten, insbesondere aufgedruckten zweiten Wirkstoffschicht sieht vor, dass in der ersten Wirkstoffschicht ein erster Wirkstoff, insbesondere D-Phenothrin und/oder Dichlorvos, aufgenommen ist, der eine höhere Flüchtigkeit aufweist als ein in der zweiten Wirkstoffschicht aufgenommener zweiter Wirkstoff, der insbesondere durch Transfluthrin gebildet ist. In der zweiten Wirkstoffschicht ist bevorzugt ferner zusätzlich zum zweiten Wirkstoff auch eine vorgegebene Menge des höherflüchtigen ersten Wirkstoffes aufgenommen. Der zweite Wirkstoff ist bezüglich seiner Flüchtigkeit so ausgebildet bzw. ausgewählt, z. B. durch Lösung in einem flüchtigkeitsreduzierenden Lösungsmittel, dass lediglich der erste Wirkstoff in größeren Mengen aus der zweiten Wirkstoffschicht ausgasen bzw. ausdampfen kann, während der zweite Wirkstoff, der gegebenenfalls in einem flüchtigkeitsreduzierenden Lösungsmittel gelöst ist, weiterhin im wesentlichen dauerhaft in der zweiten Wirkstoffschicht als Fraßgift verbleibt. Alternativ oder zusätzlich kann dies auch durch entsprechende Ausgestaltung der zweiten Wirkstoffschicht erzielt werden, insbesondere durch entsprechende Wahl der Dicke bzw. Schichtstärke der zweiten Wirkstoffschicht. Mit einem derartigen Aufbau wird vorteilhaft erreicht, dass der in der ersten Wirkstoffschicht aufgenommene erste Wirkstoff aus der ein Wirkstoffreservoir für den ersten Wirkstoff ausbildenden ersten Wirkstoffschicht in die zweite Wirkstoffschicht nach- bzw. für den Fall, dass ursprünglich, d. h. während der Herstellung, kein erster Wirkstoff in der zweiten Wirkstoffschicht vorgesehen ist, eindiffundieren kann, so dass in dieser zweiten Wirkstoffschicht in Abhängigkeit von der in der ersten Wirkstoffschicht aufgenommenen Menge des ersten Wirkstoffes für eine vorgegebene Zeitdauer eine Fraß- bzw. Kontaktgiftmischung aus erstem und zweitem Wirkstoff zur Verfügung gestellt wird, die eine besonders effektive Insektenbekämpfung ermöglicht, wie dies erfinderseitige Versuche mit Transfluthrin und D-Phenothrin bestätigt haben.

Wie erfinderseitige Versuche weiter gezeigt haben, kann auf der Basis dieses Erfindungsgedankens auch eine sehr gute Insektenbekämpfung ohne Resistenzen gegen die verwendeten Insektizide bzw. Wirkstoffe erzielt werden. Denn mit dieser erfindungsgemäßen Lösung kann durch das Nachdiffundieren des zweiten Wirkstoffes für eine sehr lange Zeit sichergestellt werden, dass die Insekten mit Wirkstoffen bekämpft werden, die unterschiedliche Angriffsmechanismen ausbilden, was einer Resistenzbildung entgegenwirkt. So stellt insbesondere die Resistenzbildung bei solchen handelsüblichen Fliegenködern ein großes Problem dar, die lediglich Azamethiphos oder Imidacloprid als Wirkstoff verwenden. Gemäß einer konkreten Ausgestaltung einer Vorrichtung für einen derartigen Fliegenköder, der als Oberschicht bzw. zweite Wirkstoffschicht eine azamethiphos- und/oder eine imidaclopridhaltige Schicht aufweist, kann z. B. in Verbindung mit leichter flüchtigen Wirkstoffen der ersten, darunter liegenden Wirkstoffschicht, wie z. B. D-Phenotrin, Diclorphos, erreicht werden, dass in der äußeren, zweiten Wirkstoffschicht somit stets neben Azamethiphos oder Imidacloprid auch z. B. D-Phenotrin oder Diclorvos vorhanden ist, da diese höherflüchtigen Wirkstoffe in die zweite Wirkstoffschicht ein- bzw. nachdiffundieren können.

Die Schichtstärke der wenigstens zwei Wirkstoffschichten liegt hier bevorzugt zwischen 0,05 bis 0,25 mm, um insbesondere den flüchtigeren Wirkstoffen der ersten Wirkstoffschicht das Eindiffundieren in die zweite Wirkstoffschicht zu ermöglichen, was bei größeren Schichtstärken erschwert ist.

Gemäß einer weiteren erfindungsgemäßen Variante ist vorgesehen, dass die Vorrichtung zudem eine bevorzugt ebenfalls pastöse Deckschicht aufweist, zwischen der und der Trägerschicht wenigstens zwei Wirkstoffschichten angeordnet sind. Die Deckschicht weist hierzu bevorzugt einen Lockstoff, insbesondere Pheromone und/oder Honig und/oder Malz und/oder Zucker auf, mittels denen die Insekten angelockt werden können. Alternativ oder zusätzlich dazu können auch wiederum fernwirkende Fraßköder, wie z. B. Skatol und/oder Milchsäure vorgesehen sein. Zur Ausbildung der Deckschicht werden bevorzugt 0,005 bis 10 mg/cm², bevorzugt 0,02 bis 7,5 mg/cm², höchst bevorzugt 0,05 bis 5 mg/cm² einer entsprechenden Paste auf eine zugeordnete Schicht, insbesondere auf eine Wirkstoffschicht, insbesondere eine zweite Wirkstoffschicht aufgebracht. Eine derartige Deckschicht erstreckt sich bevorzugt mit einer in etwa gleichen Schichtdicke über die Erstreckungsrichtung der Deckschicht. Die Schichtdicke der Deckschicht liegt dabei zwischen 0,001 bis 0,5 mm und kann sowohl als durchgehende, vollflächige Schicht ausgebildet sein oder aber auch eine poröse Struktur aufweisen. Die Schichtdicke und die durchgehende Flächigkeit bzw. die Porosität der Deckschicht ist jeweils so vorzugeben, dass die jeweils zu Bekämpfen gewünschten Insekten, insbesondere Fliegen, die Möglichkeit haben, durch diese Deckschicht hindurch, z. B. mit einem Rüssel oder dergleichen, an die durch die Wirkstoffschichten gebildeten Fraß- bzw. Kontaktgiftschichten zu gelangen, um das Gift aufnehmen zu können. Die Deckschicht dient hier somit gemäß einer besonders bevorzugten Ausführungsform in Verbindung mit den Lockstoffen ausschließlich dazu, die zu bekämpfenden Insekten anzulocken, während insbesondere die unmittelbar darunter liegende Wirkstoffschicht, die in der zuvor ausführlich geschilderten Weise aufgebaut sein kann, als reine Fraß- bzw. Kontaktschicht zur Giftspeicherung dient und die Insekten aus dieser Schicht Wirkstoffe mit hoher Konzentration aufnehmen können. Dadurch wird eine hervorragende und gewünschte Mortalität der zu bekämpfenden Insekten erzielt.

Gemäß einer hierzu besonders bevorzugten Ausgestaltung der Erfindung ist vorgesehen, dass die Vorrichtung vierschichtig aus der Trägerschicht, aus der auf der Trägerschicht aufgebrachten ersten Wirkstoffschicht, aus der auf der ersten Wirkstoffschicht aufgebrachten zweiten Wirkstoffschicht und aus der auf der zweiten Wirkstoffschicht aufgebrachten Deckschicht ausgebildet ist. Die einzelnen Schichten werden dabei im Druckverfahren, z. B. im Siebdruckverfahren aufgebracht, wie zuvor geschildert. Alternativ dazu können die einzelnen Schichten aber auch im Offset-Druckverfahren aufgebracht werden, was ebenfalls für die zuvor in Verbindung mit den anderen Ausführungsformen geschilderten Bedruckungen gilt.

Insbesondere für den Fall, dass die Trägerschicht durch ein durchsichtiges Trägermaterial, z. B. eine Trägerfolie oder dergleichen gebildet ist, kann gemäß einer weiteren besonders bevorzugten Erfindungsvariante vorgesehen sein, zwischen der Trägerschicht und der ersten Wirkstoffschicht wenigstens eine sogenannte Schutzschicht anzuordnen, insbesondere eine Lockschicht, die wenigstens einen vorgegebenen Lockstoff aufweist. Diese bevorzugt ebenfalls pastöse Schutzschicht bzw. Lockschicht ist lichtundurchlässig, wodurch die sich daran anschließende Wirkstoffschicht vor Licht geschützt werden kann, was wegen der Lichtempfindlichkeit der verwendeten Wirkstoffe von Vorteil ist. Durch die gleichzeitige Einbringung eines Lockstoffes bzw. Ausbildung aus Lockstoffen, wie sie zuvor bereits beispielhaft aufgelistet worden sind, werden somit neben dem Schutz vor Licht in einer Doppelfunktion gleichzeitig auch die zu bekämpfenden Insekten angelockt. Eine bevorzugte, konkrete Ausführungsform hierzu weist einen fünfschichtigen Aufbau auf, bei dem auf die Trägerschicht eine Lockschicht aufgebracht ist, an die sich eine erste und dann zweite Wirkstoffschicht anschließt, wobei auf letztere wiederum eine Deckschicht aufgebracht ist. Die beiden lichtempfindlichen Wirkstoffschichten sind hier dann somit vorteilhaft zwischen zwei Lockschichten ausbildenden Schichten angeordnet, gegebenenfalls mit weiteren Zwischenschichten, so dass zum einen eine besonders effiziente Anlockung der zu bekämpfenden Insekten erfolgt und zum anderen eine sichere Wirkstoffspeicherung in den Wirkstoffschichten erfolgt.

Die Trägerschicht kann bevorzugt durch ein bedruckbares Substrat aus Folie und/oder Papier und/oder Textil und/oder Karton und/oder Pappe gebildet sein, das gegebenenfalls mit einer Klebeschicht mitsamt Abdeckfolie ausgestattet ist, um an z. B. einer Wandfläche oder einer Fensterfläche haftend angebracht zu werden. Ebenso kann z. B. auf einer der Trägerschicht gegenüberliegenden Seite eine Schutzfolie als Abdeckfolie ohne weitere Funktion vorgesehen sein. Derartige Trägerschichten schützen somit für den Fall, dass sie nicht transparent sind, vor Licht, insbesondere vor UV-Licht, so dass auch mit der Trägerschicht zusätzlich oder alternativ ein Schutz der Wirkstoffe vor Licht möglich ist.

Bevorzugte Verfahrensführungen zur Herstellung einer erfindungsgemäßen Vorrichtung sind Gegenstand der Ansprüche 37 bis 39, wobei die damit erreichten Vorteile bereits zuvor in Verbindung mit der erfindungsgemäßen Vorrichtung ausführlich gewürdigt worden sind, so dass an dieser Stelle nicht mehr näher darauf eingegangen wird. Ferner ist gemäß einem besonders bevorzugten Verfahren zur Herstellung einer Köderpaste, insbesondere einer Fliegenköderpaste vorgesehen, dass ein Gewichtsteil Transfluthrin flüssig gemacht wird, insbesondere auf 35°C bis 70°C, bevorzugt auf etwa 50°C, erwärmt wird (Schmelzpunkt Transfluthrin bei 35°C) und in zwei Gewichtsteile von einem vorgewärmten Lösungsmittel, insbesondere von einem auf 30°C bis 50°C, bevorzugt auf etwa 40°C, erwärmten Lösungsmittel, das bevorzugt Öl oder eine Ölmischung ist, insbesondere z. B. Rapsöl, wie dies zuvor ausführlich erläutert worden ist, oder aber auch durch Polyethylenglykol gebildet sein kann, zugetropft wird. Die so entstehende Lösung wird dann in eine Paste eingerührt, die vorzugsweise Lockstoffe aufweist bzw. aus Lockstoffen gebildet ist, wie beispielsweise aus Fraßstimulanzien und/oder fernwirkenden Fraßködern, wie zuvor bereits des öfteren ausführlich beschrieben. Ebenso können hier selbstverständlich auch wiederum Pheromone eingebracht sein.

Die Erfindung wird nachfolgend anhand einer Zeichnung näher erläutert.

Es zeigen:
- Fig. 1: ein schematischer Schnitt durch eine erste erfindungsgemäße Ausführungsform mit einer Trägerschicht und einer Wirkstoffschicht,
- Fig. 2: eine zweite erfindungsgemäße Ausführungsform mit einem schematischen Querschnitt durch einen dreischichtigen Aufbau aus einer Trägerschicht, einer ersten und einer zweiten Wirkstoffschicht,
- Fig. 3: eine dritte Ausführungsform einer erfindungsgemäßen Vorrichtung mit einem vierschichtigen Aufbau bestehend aus einer Trägerschicht, einer ersten und zweiten Wirkstoffschicht sowie einer porösen Deckschicht,
- Fig. 4: eine vierte Ausführungsform der erfindungsgemäßen Vorrichtung mit einem schematischen Querschnitt durch einen fünfschichtigen Aufbau, bestehend aus einer Trägerschicht, einer Lockschicht, einer ersten und zweiten Wirkstoffschicht sowie einer porösen Deckschicht,
- Fig. 5: eine fünfte Ausführungsform der erfindungsgemäßen Vorrichtung der Fig. 4, jedoch mit vollflächiger, durchgehender Deckschicht anstelle einer porösen Deckschicht, und
- Fig. 6: eine schematische Darstellung einer Vorrichtung mit einer ein Wirkstoffreservoir ausbildenden ersten Wirkstoffschicht.

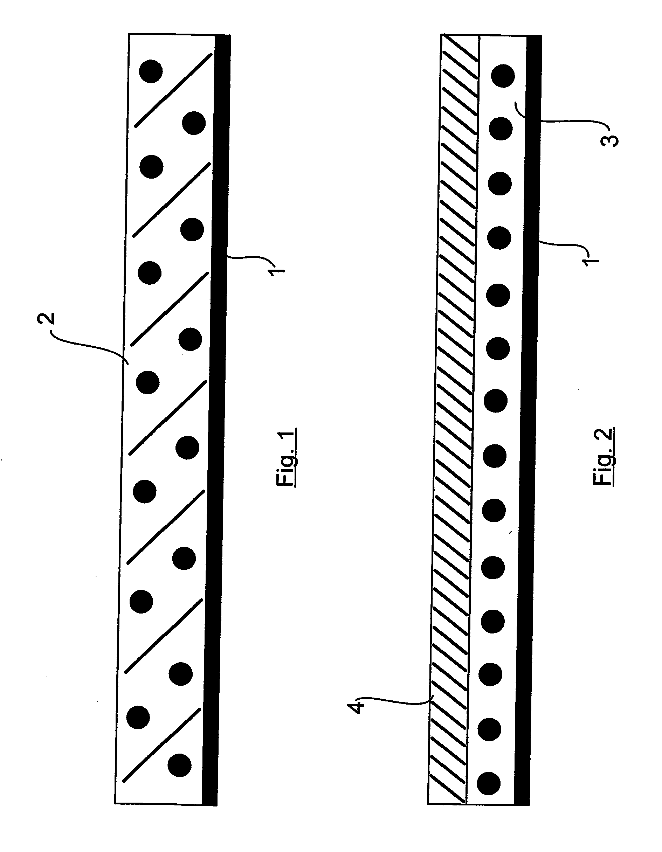

In der Fig. 1 ist eine erste Ausführungsvariante einer erfindungsgemäßen Vorrichtung zur Insektenbekämpfung, insbesondere zur Fliegenbekämpfung, gezeigt, bei der auf eine Trägerschicht 1 eine Wirkstoffschicht 2 aufgedruckt ist. Diese Wirkstoffschicht 2 ist durch eine Paste gebildet, die sowohl leicht verdampfbare Insektizide, wie z. B. Empenthrin oder D-Phenothrin und/oder Dichlorvos, als auch demgegenüber schwerer verdampfbare Wirkstoffe, wie beispielsweise Transfluthrin, aufweisen kann. Zur Einstellung der gewünschten Flüchtigkeit bzw. des gewünschten Dampfdruckes können alle oder auch nur ein Teil der Wirkstoffe verkapselt sein und/oder in entsprechenden Ölen als Lösungsmittel gelöst sein. Hierzu kommen beispielsweise Olivenöl, Rapsöl, Sonnenblumenöl in Frage. Alternativ dazu können die Wirkstoffe aber auch in Polyethylenglykolen gelöst sein. Die Schichtdicke ist hier zudem bevorzugt relativ dick und beträgt zwischen 0,1 bis 1 mm, damit ein Teil der Wirkstoffe für längere Zeit im Inneren der Paste gespeichert werden kann, d. h. eine genügend große Diffusionsbarriere gegen ein schnelles Ausdampfen aller Wirkstoffe bzw. Wirkstoffpartikel aufgebaut wird. In dieser Wirkstoffschicht 2 können zudem auch Fraßstimulanzien, wie Honig, Malz oder Zucker, und/oder fernwirkende Fraßköder, wie Skatol und/oder Milchsäure, angeordnet sein, bzw. einen Bestandteil der Paste bilden, damit die zu Bekämpfen gewünschten Insekten entsprechend angelockt werden.

In der Fig. 2 ist eine alternative Ausführungsvariante gezeigt, die auf der Trägerschicht 1 eine erste Wirkstoffschicht 3 aufweist, die direkt auf der Trägerschicht 1 aufgedruckt ist und die hauptsächlich aus leicht verdampfbaren Insektiziden wie Empenthrin und/oder D-Phenothrin und/oder Dichlorvos besteht oder diese aufweist, wobei diese Insektiziden bevorzugt in demgegenüber schwerer verdampfbaren Ölen, wie beispielsweise Olivenöl, Rapsöl, Sonnenblumenöl, oder in Polyethylenglykolen gelöst sind und in einer Grundpaste eingerührt sind. Diese Grundpaste besteht hier bevorzugt aus den eben genannten Fraßstimulanzien und aus fernwirkenden Fraßködern.

Eine auf die erste Wirkstoffschicht 3 aufgedruckte zweite Wirkstoffschicht enthält hier beispielhaft die Wirkstoffe Transfluthrin und D-Phenothrin. Diese können auch wiederum in schwerer verdampfbaren Ölen gelöst sein. Diese Wirkstoffe werden ebenfalls in die zuvor beschriebene Grundpaste eingerührt, bevor sie als zweite Wirkstoffschicht auf die erste Wirkstoffschicht 3 aufgedruckt werden. Im Gegensatz zur Variante der Fig. 1, die sehr günstig in der Herstellung ist, ist diese Ausführungsform der Fig. 2 zudem sehr effektiv in der Insektenbekämpfung, da die Wirkstoffe zuverlässig in den einzelnen, die Fraß- bzw. Kontaktschichten ausbildenden Wirkstoffschichten für eine lange Zeit gespeichert werden können.

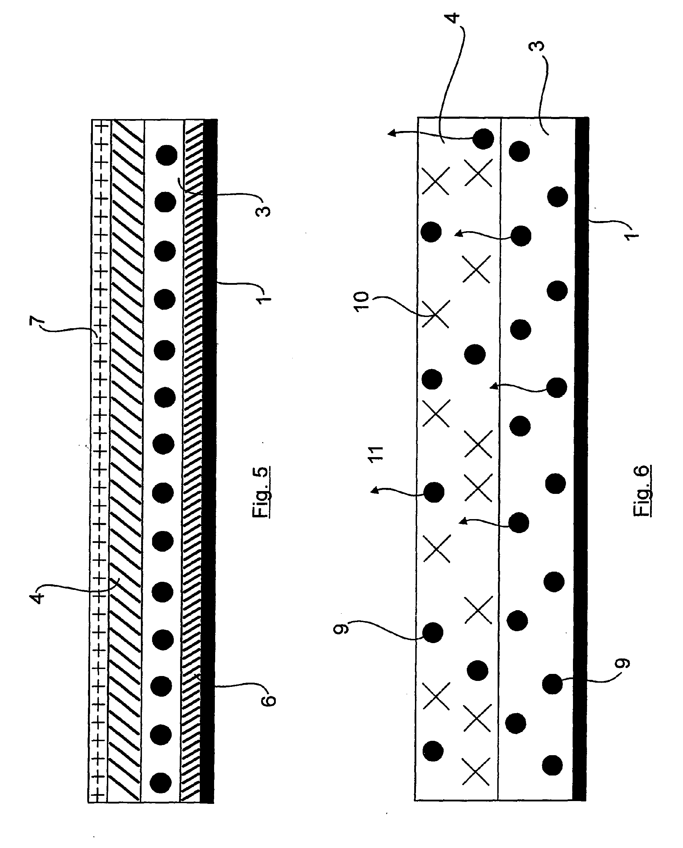

Die leichter flüchtigen Wirkstoffe können nämlich hier in die erste Wirkstoffschicht eingebracht werden, so dass diese Wirkstoffe im Laufe der Zeit in die zweite Wirkstoffschicht nächdiffundieren können, was nachfolgend anhand der konkreten Ausführungsform der Fig. 6 noch beispielhaft näher erläutert wird. Damit können hohe Giftkonzentrationen in der zweiten, oberflächennahen Wirkstoffschicht dauerhaft erzielt werden. Die zweite Wirkstoffschicht bildet hier somit einen schwer zu überwindenden Diffusionswiderstand als Wirkstoffspeicher aus, in dem hohe Fraßgift- bzw. Kontaktkonzentrationen dauerhaft bzw. für sehr lange Zeit zuverlässig gespeichert werden können. Durch diese Speicherfähigkeit der Wirkstoffschichten zur Ausbildung von Fraß- bzw. Kontaktschichten können somit hohe Konzentrationen an Wirkstoffen in den Wirkstoffschichten über einen langen Zeitraum aufrechterhalten werden. Dadurch, dass die Insekten die Wirkstoffe hauptsächlich als Fraßgift bzw. auch als Kontaktgift aufnehmen, ist zudem eine besonders effektive Insektenbekämpfung möglich, da das Gift eine hohe Mortalitätsrate bei Insekten zur Folge hat.

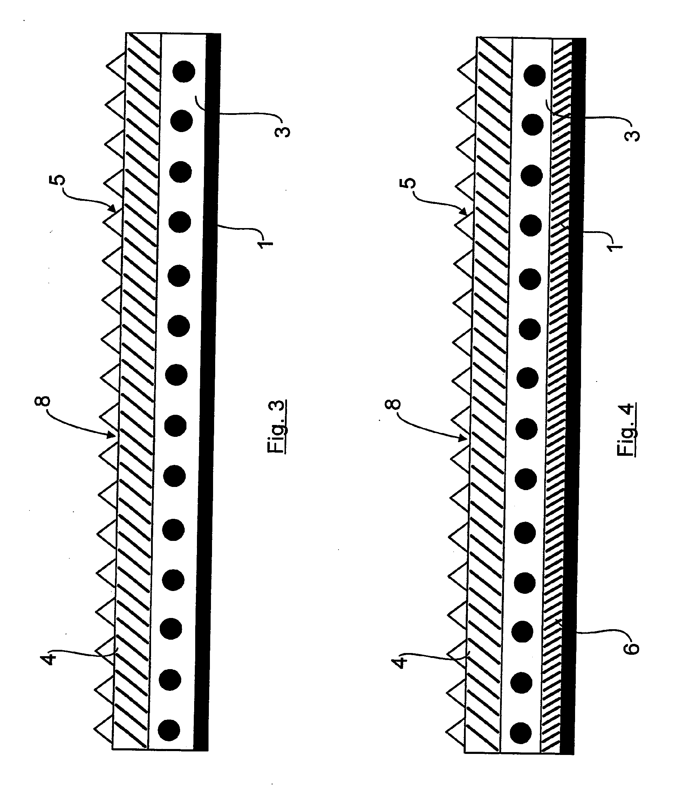

Die schematische Ausführungsform der Fig. 3 entspricht im Wesentlichen derjenigen der Ausführungsform der Fig. 2. Zusätzlich zu dieser Ausführungsform ist bei der Ausführungsform der Fig. 3 jedoch vorgesehen, dass auf die zweite Wirkstoffschicht 4 eine poröse Deckschicht 5 aufgebracht ist, die hauptsächlich aus für die zu bekämpfen gewünschten insektenanlockenden Substanzen, wie Pheromone (für Stubenfliegen z. B. Muscalure) und/oder Fraßstimulanzien und/oder fernwirkende Fraßköder besteht. Mit einer derartigen zusätzlichen als Lockschicht ausgebildeten porösen Deckschicht 5 wird gegenüber der Ausführungsvariante nach Fig. 2 zum einen eine bessere Anlockwirkung auf die zu Bekämpfen gewünschten Insekten erzielt. Zum anderen wird damit eine zusätzliche Barriereschicht ausgebildet, die das Ausdampfen von Wirkstoffen zuverlässig verhindert.

Die Ausführungsform der Fig. 4, die eine weitere alternative Erfindungsvariante darstellt, entspricht im Wesentlichen dem Aufbau der Fig. 3 mit den dort genannten Vorteilen. Zusätzlich dazu ist zwischen der ersten Wirkstoffschicht 3 und der Trägerschicht 1 hier jedoch noch eine Lockschicht 6 vorgesehen, die keine Wirkstoffe aufweist, sondern lediglich Lockstoffe, wie Pheromone, Fraßstimulanzien und/oder Fraßköder. Neben einer besseren Anlockwirkung kann hier insbesondere in Verbindung mit durchsichtigen Trägerschichten 1 ein verbesserter Lichtschutz der empfindlichen Wirkstoffe, insbesondere ein verbesserter Lichtschutz der lichtempfindlichen Pyrethroide in den Wirkstoffschichten erzielt werden.

Die Ausführungsform der Fig. 5 unterscheidet sich von derjenigen der Fig. 4 lediglich dadurch, dass die Deckschicht 7 hier nicht porös, sondern vollflächig durchgehend ausgebildet ist. Die Stärke bzw. Dicke der Deckschicht 7 ist hier so zu wählen, dass die zu Bekämpfen gewünschten Insekten, wie beispielsweise Fliegen, mit ihren Rüsseln durch die Deckschicht hindurch an die Wirkstoffschichten 3, 4 gelangen können. Aufgrund der porösen Struktur und der dadurch ausgebildeten Porenöffnungen 8 der Ausführungsformen der Fig. 3 und 4 kann die Deckschicht bei diesen etwas dicker ausgebildet sein, da durch die Porenöffnungen 8 auf alle Fälle sichergestellt ist, dass die Fliegen bzw. Insekten mit ihrem Rüssel an die die Wirkstoffe speichernden Wirkstoffschichten gelangen können.

In der schematischen Darstellung der Fig. 6 ist eine besonders bevorzugte Ausführungsform einer erfindungsgemäßen Ausführungsform gezeigt, die einen dreischichtigen Aufbau aus einer Trägerschicht 1, einer ersten Wirkstoffschicht 3 und einer zweiten Wirkstoffschicht 4 aufweist. In der ersten Wirkstoffschicht 3 ist als erster Wirkstoff 9 D-Phenothrin aufgenommen, d. h. in die zuvor beschriebene Grundpaste eingemischt bzw. eingerührt, das eine höhere Flüchtigkeit aufweist als das in der zweiten Wirkstoffschicht 4 aufgenommene Transfluthrin als zweiter Wirkstoff 10. In der zweiten Wirkstoffschicht 4 ist ferner zusätzlich zum Transfluthrin als zweitem Wirkstoff 10 auch eine vorgegebene Menge des höherflüchtigen D-Phenothrins 9 aufgenommen, d. h. wiederum in die zuvor beschriebene Grundpaste eingemischt bzw. eingerührt. Wie dies die Fig. 6 schematisch zeigt, verbleibt das Transfluthrin 10 aufgrund seiner geringen Flüchtigkeit, die gegebenenfalls durch Lösung des Transfluthrins in einem flüchtigkeitsreduzierenden Lösungsmittel unterstützt wird, im Wesentlichen dauerhaft in der zweiten Wirkstoffschicht 4 als Fraß- und/oder Kontaktgift, während das D-Phenothrin 9 aufgrund seiner höheren Flüchtigkeit aus der zweiten Wirkstoffschicht 4 ausdampft. Das aus der zweiten Wirkstoffschicht 4 ausdampfende D-Phenothrin 9 wird dann, wie dies in Fig. 6 schematisch durch die Pfeile 11 dargestellt ist, durch das aus der ersten Wirkstoffschicht 3 nachdiffundierende D-Phenothrin 9 ersetzt, so dass in dieser zweiten Wirkstoffschicht 4 in Abhängigkeit von der in der ersten Wirkstoffschicht 3 vorhandenen Menge an D-Phenothrin 9 für eine definierte Zeitdauer eine Giftmischung aus Transfluthrin 10 und D-Phenothrin 9 zur Verfügung gestellt wird, die eine besonders effektive Insektenbekämpfung ermöglicht. Auch diese Variante kann eine poröse Deckschicht entsprechend der zuvor beschriebenen Deckschicht 7 aufweisen, was hier aber nicht mehr im Detail erläutert wird. Auch kann selbstverständlich zwischen der Trägerschicht 1 und der ersten Wirkstoffschicht 3 eine weitere Schicht vorgesehen sein, z. B. eine Schicht entsprechend der Lockschicht 6.

Alternativ hierzu kann z. B. in Verbindung mit einem Fliegenköder aber auch vorgesehen sein, in der obersten, zweiten Wirkstoffschicht anstelle des Transfluthrins auch Azamethiphos oder Imidacloprid einzusetzen, gegebenenfalls zusammen mit einem demgegenüber höherflüchtigen zweiten Wirkstoff, wie z. B. D-Phenothrin und/oder Dichlorvos. In der ersten Wirkstoffschicht ist dann analog zu der vorher beschriebenen Vorrichtung lediglich das höherflüchtige D-Phenothrin und/oder Dichlorvos gespeichert. Azamethiphos und/oder Imidacloprid sind sehr gut geeignet für die Bekämpfung von Fliegen, weisen jedoch das Problem auf, dass es hier zur Bildung von Resistenzen kommt. Durch die Kombination mit einem weiteren Wirkstoff, insbesondere dem höherflüchtigen, der beständig aus der darunterliegenden ersten Wirkstoffschicht ein- bzw. nachdiffundieren kann, wird hier dann eine besonders effektive Giftmischung für die Fliegenbekämpfung mit der zweiten Wirkstoffschicht zur Verfügung gestellt, die zu keiner Resistenz bei den Insekten führt.

Des weiteren kann das eben beschriebene Ein- bzw. Nachdiffundieren von Wirkstoffen in eine andere Schicht grundsätzlich mit allen Ausführungsformen ausgebildet werden, d. h. insbesondere auch mit einer eine durchgehende vollflächige Abdeckung ausbildenden Deckschicht, um oberflächennah, d. h. insbesondere unter der Deckschicht eine mit Wirkstoffen hochangereicherte Fraß- und/oder Kontaktgiftschicht zur Verfügung zu stellen.

Wie erfinderseitige Versuche gezeigt haben, lassen sich mit den erfindungsgemäßen Vorrichtungen sehr hohe Mortalitätsraten in der gewünschten Weise erzielen, da eine effektive Speicherung der gewünschten Wirkstoffe, insbesondere von Transfluthrin und/oder D-Phenothrin, in den diese Wirkstoffe jeweils aufweisenden Wirkstoffschichten erreicht werden kann. Es wird durch die erfindungsgemäße Lehre somit erstmalig eine Vorrichtung zur Insektenbekämpfung zur Verfügung gestellt, bei der Pyrethroide, insbesondere Transfluthrin und/oder D-Phenothrin, als Fraß- bzw. Kontaktgifte dauerhaft und zuverlässig in den sogenannten Wirkstoffschichten gespeichert werden können.

Der Fliegenköder selbst kann als Aufkleber, z. B. zum Anbringen ans Fenster oder ähnlichen Flächen selbstklebend oder aber auch als Aufsteller, Deckenhänger, Mobile, in Form von Tafeln oder dergleichen ausgebildet sein. Dabei kann die Vorrichtung unterschiedliche Motive ausbilden, wie z. B. Falter, Schmetterlinge, Blumenmotive, etc.

Besonders bevorzugt ist hierbei zudem auch eine Ausgestaltung, bei der das Trägermaterial, d. h. die Trägerschicht mittels eines Spezialsiebdruckverfahrens veredelt ist, bei dem Kippeffektfarben (Interferenz) unterschiedlichster Art, Fotolumineszenzfarben, BI-Thermochromfarben oder Thermochromfarben unterschiedlichster Art mit aufgebracht sind. Diese aufgebrachten Mittel sind durch Farb-, Blickwinkel-, Temperatur-, Tageslichtstärkenänderung, Kippeffekt sowie UV-Einstrahlung in ihrer Wirkung veränderbar und dienen damit z. B. auch dem Anlocken von Insekten, insbesondere Fliegen.

## Patentansprüche

1. Vorrichtung zur Insektenbekämpfung, insbesondere zur Bekämpfung von Fliegen, mit einer Trägerschicht und wenigstens einer auf der Trägerschicht (1) aufgebrachten Wirkstoffschicht (2; 3, 4), die eine vorgegebene Menge wenigstens eines Wirkstoffes zur Insektenbekämpfung aufweist, **dadurch gekennzeichnet, dass** die wenigstens eine Wirkstoffschicht (2; 3, 4) als Fraß- und/oder Kontaktschicht, insbesondere in pastöser Form, ausgebildet ist, in der der wenigstens eine Wirkstoff als Fraß- und/oder Kontaktgift gespeichert ist.

2. Vorrichtung nach Anspruch 1, **dadurch gekennzeichnet, dass** das Fraßund/oder Kontaktgift durch wenigstens einen Wirkstoff aus der Gruppe der Pyrethroide, insbesondere durch Transfluthrin und/oder D-Phenotrin und/oder Prallethrin und/oder Empenthrin, und/oder aus der Gruppe der Phosphorsäureester, insbesondere Dichlorvos, gebildet ist.

3. Vorrichtung nach Anspruch 1 oder 2, **dadurch gekennzeichnet, dass** der wenigstens eine Wirkstoff zur Herabsetzung seiner Flüchtigkeit bzw. seines Dampfdruckes in einem Lösungsmittel gelöst ist und/oder dass der wenigstens eine Wirkstoff zur Beeinflussung seines Flüchtigkeitsverhaltens verkapselt ist, insbesondere ein Wirkstofftropfen von einer gas- bzw. flüssigkeitsdurchlässigen Hülle umhüllt und damit verkapselt ist.

4. Vorrichtung nach Anspruch 3, **dadurch gekennzeichnet, dass** das Lösungsmittel durch ein Öl oder eine Ölmischung, insbesondere Olivenöl und/oder Rapsöl und/oder Sonnenblumenöl, oder durch wenigstens ein Polyethylenglykol gebildet ist.

5. Vorrichtung nach Anspruch 3 oder 4, **dadurch gekennzeichnet, dass** die Vorrichtung zweischichtig aus der Trägerschicht (1) und einer einzigen Wirkstoffschicht (2) aufgebaut ist,
dass die Schichtdicke der einzigen Wirkstoffschicht (2) vorzugsweise so dick gewählt ist, dass die Wirkstoffschicht (2) gleichzeitig eine Diffusionsbarierre für die darin enthaltenen Wirkstoffe ausbildet und/oder dass die einzige Wirkstoffschicht (2), in der der wenigstens eine Wirkstoff als Fraßund/oder Kontaktgift gespeichert ist, wenigstens teilweise aus einem Lockstoff besteht und/oder einen darin eingebrachten Lockstoff aufweist.

6. Vorrichtung nach Anspruch 5, **dadurch gekennzeichnet, dass** die Wirkstoffschicht (2) wenigstens teilweise aus Fraßstimulanzien, insbesondere Honig und/oder Malz und/oder Zucker, und/oder aus fernwirkenden Fraßködern, insbesondere Skatol und/oder Milchsäure, oder Pheromonen gebildet ist.

7. Vorrichtung nach Anspruch 5 oder 6, **dadurch gekennzeichnet, dass** die Wirkstoffschicht (2) durch eine auf die Trägerschicht (1) aufdruckbare, insbesondere im Siebdruckverfahren aufdruckbare Paste gebildet ist.

8. Vorrichtung nach einem der Ansprüche 5 bis 7, **dadurch gekennzeichnet, dass** die einzige Wirkstoffschicht (2) eine Schichtdicke zwischen 0,05 bis 1,5 mm, bevorzugt zwischen 0,1 mm bis 1 mm, aufweist.

9. Vorrichtung nach Anspruch 7 oder 8, **dadurch gekennzeichnet, dass** auf die Trägerschicht (1) 0,05 bis 50 mg/cm², bevorzugt 0,2 bis 35 mg/cm², höchst bevorzugt 0,5 bis 30 mg/cm² Paste als Wirkstoffschicht (2) mit vorzugsweise in etwa durchgehend gleicher Schichtstärke aufgebracht ist.

10. Vorrichtung nach einem der Ansprüche 5 bis 9, **dadurch gekennzeichnet, dass** in der Wirkstoffschicht (2) 0,005 bis 7 mg/cm², bevorzugt 0,05 bis 5 mg/cm², höchst bevorzugt 0,1 bis 3 mg/cm² Transfluthrin und/oder 0,001 bis 4 mg/cm², bevorzugt 0,05 bis 3 mg/cm², höchst bevorzugt 0,01 bis 2 mg/cm² D-Phenothrin enthalten sind.

11. Vorrichtung nach einem der Ansprüche 1 bis 4, **dadurch gekennzeichnet, dass** die Vorrichtung wenigstens dreischichtig aus der Trägerschicht (1) und wenigstens zwei weiteren Wirkstoffschichten (3, 4) aufgebaut ist, und
**dass** eine erste Wirkstoffschicht (3) als Zwischenschicht zwischen der Trägerschicht (1) und einer zweiten Wirkstoffschicht (4) vorgesehen ist.

12. Vorrichtung nach Anspruch 11, **dadurch gekennzeichnet, dass** der wenigstens eine in der ersten Wirkstoffschicht (3) gespeicherte Wirkstoff bzw. wenigstens ein Teil davon eine höhere Flüchtigkeit aufweist als der wenigstens eine in der zweiten Wirkstoffschicht (4) gespeicherte Wirkstoff.

13. Vorrichtung nach Anspruch 12, **dadurch gekennzeichnet, dass** zur Einstellung einer höheren Flüchtigkeit des wenigstens einen Wirkstoffes der ersten Wirkstoffschicht (3) und/oder zur Einstellung der niedrigeren Flüchtigkeit des wenigstens einen Wirkstoffes der zweiten Wirkstoffschicht (4) der jeweilige Wirkstoff in einem die Flüchtigkeit herabsetzenden Lösungsmittel gelöst ist, insbesondere in einem Öl oder einer Ölmischung oder in wenigstens einem Polyethylenglykol gelöst ist.

14. Vorrichtung nach Anspruch 12 oder 13, **dadurch gekennzeichnet, dass** die Vorrichtung dreischichtig aus der Trägerschicht (1), aus der darauf aufgebrachten ersten Wirkstoffschicht (3) als Zwischenschicht und aus der auf die erste Wirkstoffschicht(3) aufgebrachten zweiten Wirkstoffschicht (4) als Barriereschicht aufgebaut ist.

15. Vorrichtung nach einem der Ansprüche 11 bis 14, **dadurch gekennzeichnet, dass** die erste und zweite Wirkstoffschicht (3, 4) durch eine auf die jeweilige Schicht aufdruckbare, insbesondere im Siebdruckverfahren aufdruckbare Paste gebildet ist.

16. Vorrichtung nach Anspruch 15, **dadurch gekennzeichnet, dass** auf die Trägerschicht (1) 0,05 bis 40 mg/cm², bevorzugt 0,3bis 30 mg/cm² und höchst bevorzugt 0,5 bis 22 mg/cm² Paste als erste Wirkstoffschicht (3) mit vorzugsweise in etwa durchgehend gleicher Schichtstärke aufgebracht ist.

17. Vorrichtung nach Anspruch 15 oder Anspruch 16, **dadurch gekennzeichnet, dass** auf die erste Wirkstoffschicht (3) 0,05 bis 40 mg/cm², bevorzugt 0,3 bis 30 mg/cm² und höchst bevorzugt 0,5 bis 22 mg/cm² Paste als zweite Wirkstoffschicht (4) mit vorzugsweise in etwa durchgehend gleicher Schichtstärke aufgebracht sind.

18. Vorrichtung nach einem der Ansprüche 11 bis 17, **dadurch gekennzeichnet, dass** die Schichtdicke jeder der wenigstens zwei Wirkstoffschichten zwischen 0,05 mm und 1,5 mm liegt

19. Vorrichtung nach einem der Ansprüche 11 bis 18, **dadurch gekennzeichnet, dass** der wenigstens eine Wirkstoff jeder Wirkstoffschicht (3, 4) in eine Lockmittelpaste eingebracht ist, die wenigstens ein Lockmittel enthält, wobei der wenigstens eine Wirkstoff gegebenenfalls in einem schwerer verdampfbaren Lösungsmittel gelöst ist, um die Flüchtigkeit bzw. den Dampfdruck des jeweiligen Wirkstoffes herabzusetzen.

20. Vorrichtung nach Anspruch 19, **dadurch gekennzeichnet, dass** die Lockmittelpaste Fraßstimulanzien, insbesondere Honig und/oder Malz und/oder Zucker, und/oder fernwirkende Fraßköder, insbesondere Skatol und/oder Milchsäure, und/oder Pheromone aufweist.

21. Vorrichtung nach einem der Ansprüche 11 bis 20, **dadurch gekennzeichnet, dass** der Wirkstoff der ersten Wirkstoffschicht (3) durch Empenthrin und/oder D-Phenothrin und/oder Dichlorvos gebildet ist.

22. Vorrichtung nach einem der Ansprüche 11 bis 21, **dadurch gekennzeichnet, dass** die Konzentration des Wirkstoffes in der ersten Wirkstoffschicht (3) 0,005 bis 6 mg/cm², bevorzugt 0,03 bis 4 mg/cm², höchst bevorzugt 0,09 bis 3 mg/cm² beträgt.

23. Vorrichtung nach einem der Ansprüche 11 bis 22, **dadurch gekennzeichnet, dass** der Wirkstoff der zweiten Wirkstoffschicht (4) durch Transfluthrin und/oder D-Phenothrin gebildet ist.

24. Vorrichtung nach Anspruch 23, **dadurch gekennzeichnet, dass** die zweite Wirkstoffschicht (4) 0,005 bis 4 mg/cm², bevorzugt 0,05 bis 2,5 mg/cm², höchst bevorzugt 0,1 bis 1,5 mg/cm² Transfluthrin und/oder 0,001 bis 2 mg/cm², bevorzugt 0,05 bis 1,2 mg/cm², höchst bevorzugt 0,01 bis 0,5 mg/cm² D-Phenothrin aufweist.

25. Vorrichtung nach einem der Ansprüche 11 bis 24, **dadurch gekennzeichnet, dass** die zweite Wirkstoffschicht (4) auf die erste Wirkstoffschicht (3) aufgebracht ist,
dass in der ersten Wirkstoffschicht (3) ein erster Wirkstoff, insbesondere D-Phenothrin, aufgenommen ist, der eine höhere Flüchtigkeit aufweist als ein in der zweiten Wirkstoffschicht (4) aufgenommener zweiter Wirkstoff, insbesondere Transfluthrin,
dass in der zweiten Wirkstoffschicht (4) zusätzlich zum zweiten Wirkstoff gegebenenfalls auch eine vorgegebene Menge des ersten höherflüchtigen Wirkstoffes aufgenommen ist,
dass der zweite Wirkstoff bezüglich seiner Flüchtigkeit so ausgebildet bzw. ausgewählt ist und/oder die zweite Wirkstoffschicht (4) so ausgebildet ist, bevorzugt eine solche Dicke bzw. Schichtstärke aufweist, dass aus der zweiten Wirkstoffschicht (4) keiner der Wirkstoffe oder bevorzugt lediglich der erste Wirkstoff in größeren Mengen aus der zweiten Wirkstoffschicht (4) ausgasen bzw. ausdampfen kann und der zweite Wirkstoff, der gegebenenfalls in einem flüchtigkeitsreduzierenden Lösungsmittel gelöst ist, im Wesentlichen in der zweiten Wirkstoffschicht (4) als Fraß- und/oder Kontaktgift verbleibt, und
dass der in der ersten Wirkstoffschicht (3) aufgenommene erste Wirkstoff aus der ein Wirkstoffreservoir für den ersten Wirkstoff ausbildenden ersten Wirkstoffschicht (3) in die zweite Wirkstoffschicht (4) ein- oder nachdiffundiert, je nachdem, ob in der zweiten Wirkstoffschicht bereits der höherflüchtige erste Wirkstoff vorhanden ist, so dass in dieser zweiten Wirkstoffschicht (4) in Abhängigkeit von der in der ersten Wirkstoffschicht (3) aufgenommenen Menge des ersten Wirkstoffes für eine vorgegebene Zeitdauer eine Fraßgiftmischung aus erstem und zweitem Wirkstoff zur Verfügung gestellt wird.

26. Vorrichtung nach Anspruch 25, **dadurch gekennzeichnet, dass** der zweite Wirkstoff durch Azamethiphos oder Imidacloprid gebildet ist, und
dass der erste gegenüber dem zweiten Wirkstoff höherflüchtige Wirkstoff bevorzugt D-Phenotrin und/oder Dichlorvos ist.

27. Vorrichtung nach einem der Ansprüche 11 bis 26, **dadurch gekennzeichnet, dass** die wenigstens zwei Wirkstoffschichten (3, 4) zwischen der Trägerschicht (1) und einer Deckschicht (5; 7) liegen.

28. Vorrichtung nach Anspruch 27, **dadurch gekennzeichnet, dass** bevorzugt pastöse die Deckschicht (5; 7) wenigstens einen Lockstoff, insbesondere Pheromone und/oder Honig und/oder Malz und/oder Zucker, und/oder fernwirkende Fraßköder, bevorzugt Skatol und/oder Milchsäure, aufweist.

29. Vorrichtung nach Anspruch 27 oder 28, **dadurch gekennzeichnet, dass** zur Ausbildung der Deckschicht (5; 7) 0,005 bis 10 mg/cm², bevorzugt 0,02 bis 7,5 mg/cm², höchst bevorzugt 0,05 bis 5 mg/cm² einer Paste auf eine zugeordnete Schicht, insbesondere eine Wirkstoffschicht (3), aufgebracht sind, bevorzugt mit einer über die, Erstreckungsrichtung der Deckschicht (5; 7) in etwa gleichen Schichtdicke.

30. Vorrichtung nach einem der Ansprüche 27 bis 29, **dadurch gekennzeichnet, dass** die Schichtdicke der Deckschicht (5; 7) zwischen 0,001 bis 0,5 mm liegt.

31. Vorrichtung nach einem der Ansprüche 27 bis 30, **dadurch gekennzeichnet, dass** die Deckschicht (7) als durchgehende, vollflächige Schicht ausgebildet ist oder dass die Deckschicht (5) eine poröse Struktur aufweist.

32. Vorrichtung nach einem der Ansprüche 27 bis 31, **dadurch gekennzeichnet, dass** die Vorrichtung vierschichtig aus der Trägerschicht (1), aus der auf der Trägerschicht (1) aufgebrachten ersten Wirkstoffschicht (3), aus der auf der ersten Wirkstoffschicht (4) aufgebrachten zweiten Wirkstoffschicht (4) und aus der auf der zweiten Wirkstoffschicht aufgebrachten Deckschicht (5; 7) ausgebildet ist.

33. Vorrichtung nach einem der Ansprüche 11 bis 32, **dadurch gekennzeichnet, dass** zwischen der Trägerschicht (1) und der ersten Wirkstoffschicht (3) wenigstens eine bevorzugt pastöse Lockschicht (6) angeordnet ist, die wenigstens einen vorgegebenen Lockstoff und/oder Duftstoff aufweist.

34. Vorrichtung nach Anspruch 33, **dadurch gekennzeichnet, dass** zur Ausbildung der Lockschicht (6) 0,05 bis 10 mg/cm², bevorzugt 0,2 bis 7,5 mg/cm², höchst bevorzugt 0,5 bis 5 mg/cm² Paste auf eine zugeordnete Schicht, bevorzugt die Trägerschicht (1) aufgebracht sind, bevorzugt mit einer über die Erstreckungsrichtung der Lockschicht (6) in etwa gleichen Schichtdicke.

35. Vorrichtung nach Anspruch 33 oder 34, **dadurch gekennzeichnet, dass** die Lockschicht (6) wenigstens teilweise aus Fraßstimulanzien, insbesondere Honig und/oder Malz und/oder Zucker, und/oder fernwirkenden Fraßködern, insbesondere Skatol und/oder Milchsäure, und/oder Pheromonen aufgebaut ist.

36. Vorrichtung nach einem der Ansprüche 1 bis 35, **dadurch gekennzeichnet, dass** die Trägerschicht (1) durch ein bedruckbares Substrat aus Folie und/oder Papier und/oder Textil und/oder Karton und/oder Pappe gebildet ist.

37. Verfahren zur Herstellung einer Vorrichtung nach einem der Ansprüche 1 bis 36, **dadurch gekennzeichnet, dass** die wenigstens eine Fraßschicht (2; 3, 4) auf die Trägerschicht (1) aufgedruckt, insbesondere in pastöser Form aufgedruckt wird, bevorzugt im Siebdruckverfahren (1) aufgedruckt wird.

38. Verfahren, insbesondere nach Anspruch 37, **dadurch gekennzeichnet, dass** auf die Trägerschicht (1) wenigstens zwei Wirkstoffschichten (3, 4) als Fraßgifte speichernde Fraßschichten aufgebracht, insbesondere aufgedruckt werden, und
dass in die zwischen der zweiten Wirkstoffschicht (4) und der Trägerschicht (1) liegende erste Wirkstoffschicht (3) Wirkstoffe eingebracht werden, die leichter verdampfbar bzw. leichter flüchtig sind als die in die zweite Wirkstoffschicht (4) eingebrachten Wirkstoffe.

39. Verfahren nach Anspruch 38, **dadurch gekennzeichnet, dass** die Wirkstoffe zur Einstellung ihrer Flüchtigkeit in einem demgegenüber schwerer flüchtigen bzw. verdampfbaren Lösungsmittel gelöst und/oder verkapselt werden.

40. Verfahren zur Herstellung einer Köderpaste, insbesondere einer Fliegenköderpaste, **dadurch gekennzeichnet, dass** ein Gewichtsteil Transfluthrin geschmolzen bzw. verflüssigt, bevorzugt auf 35°C bis 70°C, höchst bevorzugt .auf etwa 40°C, erwärmt wird und in zwei Gewichtsteile von einem vorgewärmten Lösungsmittel, insbesondere von einem auf 30°C bis 50°C, bevorzugt auf etwa 40°C, erwärmten Lösungsmittel, bevorzugt Öl, höchst bevorzugt Rapsöl, zugetropft wird, und dass die entstandene Lösung in eine Lock- und/oder Duftstoffe aufweisende Paste eingerührt wird.
